# EUROPEAN PATENT SPECIFICATION

(11) **EP 2 273 220 B1**
(45) Date of publication and mention of the grant of the patent: **27.02.2019**
(21) Application number: 10165376.4
(22) Date of filing: 09.06.2010
(51) Int. Cl.: F25D 31/00, F25D 29/00, G01K 1/14

(54) **Method for measuring core temperature in a frozen object and plate freezer.**
Verfahren zur Messung der Kerntemperatur in einem gefrorenen Objekt und Plattenfroster.
Procédé de mesure de la température à coeur d'un objet congelé et congélateur à plaques.

(30) Priority: 12.06.2009 DK 200900731
(43) Date of publication of application: 12.01.2011
(73) Proprietor: A/S Dybvad Stalindustri, 9352 Dybvad (DK)
(72) Inventor: Jensen, John Møller, 9300, Sæby (DK)
(74) Representative: Tellefsen, Jens J.

(56) References cited:
- EP-A1- 1 043 555
- WO-A1-89/03965
- WO-A1-03/023542
- WO-A2-2009/035194
- AU-B2- 708 041
- SU-A1- 1 083 041
- US-A- 4 593 537
- US-A- 4 697 429
- US-A- 4 884 626
- US-A- 6 089 110

## Description

### Field of the Invention

The present invention is directed at a method for measuring core temperature in a frozen object and a freezer incorporating means in order to utilize the above-mentioned method.

### Background of the Invention

For a number of purposes it is often desired to freeze items in an industrial way. For example for a number of foodstuffs such as for example meat, fish, shrimp, lobsters and other crustaceans it is advantageous to be able to freeze these products as soon as possible in order to be able to deliver them as fresh as possible to the consumer. For this purpose a number of industry type freezers have been developed utilizing various principles in order to provide fast and economic freezing of the products. The type of freezer depends on the type of product and the desired shape and form of the frozen products depending on the possible further processing which is needed before the products are ready for consumption.

The present invention is directed and developed especially for use with one type of freezers, the so-called vertical plate freezers, but is also usable with another type of freezers known as horizontal plate freezers.

Below a short explanation of these two types of freezers will be set out, but the principle to which the present invention is usable is any type of freezer where a plurality of objects, for example fish, are placed in a confined space, where all the objects placed in this confined space are frozen as a whole thereby creating what will be referred to as a block.

In a vertical plate freezer a plurality of vertical freezing plates are positioned on a substantially flat bottom. The plates are arranged with a distance between them. Furthermore, side limitations are provided such that the distance between the plates, the bottom and the side limitations create a void which void is suitable to be filled with for example fresh fish to be frozen into a block as explained above.

By circulating a freezing media, for example a cryonic liquid, in the freezing plates the heat is removed from the fish and eventually the filled void will be one large frozen block. At this point the circulation of freezing media/cryonic liquid is terminated in the freezing plates and the vertical freezer is disassembled in various ways in order to free the block such that these may be removed for further packaging.

In order to create an economic freezing cycle it is desirable to freeze as much product, for example fish, as possible in the shortest time. On the other hand, it is necessary to make sure that the entire block is completely frozen before the blocks are removed from the freezer in order to ensure that the highest hygienic standards are attained. Any unfrozen sections in the block may result in decay, which may render not only that particular frozen block useless and ready for destruction, but the entire load in the freezer must be destroyed. In order to achieve that the blocks are completely frozen, the operator of the freezer will allow the freezing process to be carried on longer than necessary in order to ensure that the entire block is frozen completely.

The other type of freezer mentioned above, i.e. the horizontal plate freezer, operates from a more or less identical principle in that a plurality of horizontal freezing plates are superposed one on top of the other in a stack. Means are provided for vertically separating/displacing the plates such that it is possible to place objects to be frozen, for example fish placed in cardboard boxes between two superposed vertically adjacent plates.

Once the freezer or at least the layer between two vertically adjacent horizontal plates has been filled with fish, for example packed in boxes, the plates are lowered such that the objects between the plates come into contact with the freezing plates. In this position it is possible to thermically exchange heat and by circulating a cryonic media in the freezing plates the objects in the boxes will eventually be frozen in a manner comparable to the vertical plate freezer described above.

At the end of the freezing cycle the means for displacing the horizontal plates vertically are activated whereby it becomes possible to remove the frozen boxes/objects after which the freezer is ready for the following cycle.

The problems relating to freezing cycle times and assurance that the products to be frozen are completely frozen are also valid with respect to a horizontal plate freezer.

The problems relating to freezing cycles and process times are furthermore complicated in that various types of products may be frozen in the same type of freezer whereby the operator must be careful to adjust the freezing time correspondingly in order to achieve that a complete freezing of the whole block is achieved. This usually leads to longer freezing cycle times and corresponding excess energy consumption in the freezer. Also the productivity of the freezer is lowered in that some effective freezing time is wasted on making sure that the blocks in the freezer are completely frozen. Typically, the freezing cycle is controlled by a timer where the operator will add 10-20% extra time in order to ensure that a complete freezing-in of the object has been achieved.

From AU 708041 B a freezer is known, which freezer is not of the types described above. The freezer known from AU 708041 B comprises a freezing space delimited by ceramic walls on some surfaces, by a fan wall and a door portion. Inside the freezer material to be frozen may be arranged on removable shelves. Before the freezing cycle commences a temperature sensor is inserted in some of the objects/materials to be frozen. This concept corresponds to the well-known household concept of inserting a thermometer into a roast in an oven, in order to be able to determine when the roast is done.

With the present invention directed to plate freezers, the above technology is not suitable, in that it is not possible to insert and remove the sensor in the manner described. US 6089110 discloses a construction of a multi-layered wall delimiting a freezing space, where means are provided for being able to insert a sensor through the wall without jeopardizing or affecting the otherwise closed interior space of the freezer.

US 4884626 discloses a comparable construction as disclosed in AU 708041 B (see above). The construction, however, is suitable both with respect to being used as an oven or a freezer.

US 4697429 and WO 2009/035194 and WO03/023542 all describe various methods of controlling the freezing cycle, but do not give specifics with respect to the construction of the freezer, or how this freezing cycle is obtained.

US 4593537 and EP 1043555 both disclose vertical plate freezer constructions with various mechanical constructions in order to operate the plates of the plate freezer. The same is true for WO 89/03965 relating to a horizontal plate freezer.

Common for these three plate freezers is the fact that they are silent with respect to the use of temperature sensors and the use of the obtained temperature data in controlling the freezing cycle.

### Object of the Invention

It is an object of the present invention to provide a method and a freezer which optimizes the freezing process by detecting the temperature actually achieved in the frozen object such that the overall freezing time and thus the energy consumption may be reduced and the active productivity of each freezer may be increased.

### Description of the Invention

The present invention addresses this by providing a method for measuring core temperature in a frozen object, as defined in claim 1. Accordingly, a temperature sensor is arranged projecting from an inside wall of a horizontal or vertical plate freezer. The sensor has means for registering the temperature accessible outside the freezer. The material to be frozen is placed around the sensor inside the freezer, and the freezing process is controlled at least in part by data collected from the temperature sensor.

The temperature sensor is in this manner embedded in the material to be frozen, and by placing the sensor correctly it is possible to register the core temperature. By core temperature shall be understood the part of the material to be frozen which will be frozen last such that when the temperature sensor registers the desired temperature, it is ensured that the complete material mass placed in the freezer has all achieved the desired temperature.

As it is foreseen that the temperature sensor is electronic, it is possible to use the feed back from the temperature sensor in order to control the freezing cycle such that the most optimum freezing process may be achieved.

In a further advantageous embodiment of the method the freezing process is controlled by having a complete freezing cycle stored in the control unit, such that the actual temperature registered by the temperature sensor is compared to the complete freezing cycle, according to which input and freezing cycle the control unit regulates the freezer, to achieve that the freezing process closely follows the predetermined freezing cycle, and when a pre-defined temperature is registered by the sensor, the control unit stops the freezing process.

In practice the most optimal freezing cycle is not always to run the freezer at its highest capacity all the time, but in some instances it might be desirable to allow the front which is frozen to travel at a sedate pace through the block of material by adjusting the freezing process accordingly.

By entering a pre-defined temperature, for example in the shape of a curve stored in a computer memory, it is possible with input from the temperature sensor to regulate the freezing process such that the most optimal freezing is achieved. The most optimal freezing process is the process where the product is frozen without damaging the product, but at the same time in the fastest way possible in order to ensure overall productivity and thereby a good economy for the entire installation.

In a still further advantageous embodiment the temperature sensor, when the freezing cycle is finished, is withdrawn from the now frozen material through the inside wall of the freezer, after which the frozen material may be removed.

As the products to be frozen are stationary during the freezing process, it is advantageous to remove the temperature sensor once the freezing cycle has ended such that the frozen objects/blocks may be removed for further processing such as for example packaging and the like.

As the temperature sensor is removed at this point, a small aperture will be present in one of the products, but compared to the overall size of the blocks normally manufactured in freezers of this type this aperture is negligible. Furthermore, the removal of the temperature sensor provides a block of frozen product completely free of foreign matter and as such with respect to the control of freezing cycle, the product does not need any further attention as would have been required had a temperature sensor been frozen into the center of the block and left there during the freezing cycle. Such a temperature sensor needs to be removed afterwards and would require manual labour locating the sensor and cutting in the finished block in order to remove the sensor.

The invention is also directed to a vertical or horizontal plate freezer as defined in claim 4. The freezer comprises wall members delimiting a freezing space, where a temperature sensor is projecting from an inside wall of the freezer into the freezing space, where said freezing space is adapted to be filled with material to be frozen, where said temperature sensor is adapted to be embedded in said material to be frozen.

With this construction it is foreseen that the general construction of the freezer is complete such that the known properties of the freezer are maintained, but the temperature sensor will add the extra quality as already discussed above.

By embedding the temperature sensor in the material the actual temperature in the material to be frozen is registered and as such there is no simulation or correlation to any theoretically calculated freezing temperatures, but the actual conditions inside the freezer with that particular product and not the product in general, but that specific product placed in the freezing space, is registered and used in order to control the freezing cycle.

In a still further advantageous embodiment said sensor is arranged at a distance from the inside wall of the freezer corresponding to approx. half the distance of the thinnest cross-distance of the material to be frozen. In this manner it is ensured that the sensor is geometrically placed where it will take the longest time for the material to freeze such that it is achieved that a complete freezing of the entire block of material is obtained.

In order to be able to remove the frozen block from the freezer the temperature sensor in a further advantageous embodiment is removable or detachable. The removable characteristics may be obtained for example by providing a temperature sensor as suggested in a further advantageous embodiment which is conically shaped and optionally provided with a friction reducing layer, such as for example Teflon, fat, or Vaseline.

The conically shaped temperature sensor will as soon as it has been moved very slightly be completely free from the frozen material and as such easy to remove. By further providing a friction reducing layer the removal (withdrawal) of the temperature sensor will become increasingly easy. Depending on the material to be frozen various means for achieving the friction reducing layer may be obtained such as for example providing the outside of the temperature sensor with Teflon® or other non-slip surfaces or fat or Vaseline® which will create a boundary between the sensor and the material to be frozen which will remain substantially viscous during the freezing and thereby still allow the temperature sensor to be relatively easy removed from the frozen block.

In a still further advantageous embodiment the freezer is a vertical plate freezer, where a plurality of freezing plates are arranged vertically on a bottom, and where side limitations are provided adjacent said bottom and the vertical sides of the freezing plates, whereby the bottom, two freezing plates and the side limitations delimits a station, and that the temperature sensor is arranged in a side limitation or the bottom, projecting into at least one station for each freezer.

Typically the freezing medium/cryonic liquid used in vertical plate freezers is circulated in the freezing plates, and by arranging the temperature sensor, not in a freezing plate but for example in the bottom or in the side limitation, the temperature sensor installation as such does not interfere with the construction of the freezing plates and therefore the freezing cycle and the capacity of the freezer are not interfered with.

For the same reasons as already mentioned above with reference to the vertical plate freezer it is advantageous not to arrange the temperature sensor in the freezing plates as such an arrangement would hamper and limit the circulation of cryonic liquid. Furthermore, the removal would be hampered in that traditionally the neighboring space will also filled with product, and as such it would be very difficult to provide a construction where it is possible to remove the sensor without interfering with the neighboring space. It is therefore advantageous to remove the temperature sensor through the bottom or the side limitations as these usually have an open or free rear side giving room for the removal of the temperature sensor.

In a still further advantageous embodiment the freezers are horizontal plate freezers where a plurality of freezing plates are arranged horizontally and superposed, where means are provided for displacing the horizontal plates vertically, and where in at least one horizontal plate, the temperature sensor is arranged projecting upwards or downwards.

As opposed to the vertical plate freezers, the horizontal freezers often do not have side limitations and rarely bottoms. It is therefore necessary to provide the sensor in a freezing plate. On the other hand it does not need to be removable from the freezing plate, as the freezing plate is moved, relative to the block, during opening and closing of the freezer.

In operation a block of product to be frozen is placed for example in an open top box on a horizontal plate in the freezer. As the horizontal freezing plates are moved vertically into contact with the block, the temperature sensor will insert itself into the block.

As the freezing cycle is completed (the sensor has registered and communicated the pre-defined target temperature, and the circulation of cryogenic liquid is terminated) the horizontal plates are separated by moving them apart vertically. During this movement the sensor will be withdrawn from the block, and the frozen blocks are ready to be removed.

### Description of the Drawing

The invention will now be explained with reference to the accompanying drawing, wherein
Figure 1 illustrates a section of a vertical plate freezer comprising a temperature sensor
Figure 2 illustrates the temperature sensor in a withdrawn stage
Figure 3 and 4 schematically illustrate the inventive principles applied to a horizontal plate freezer.

### Detailed Description of the Invention

The invention will be explained in the drawings with reference to a freezer of the type vertical plate freezer, but as already mentioned above the invention is also suitable to be applied to horizontal plate freezers .

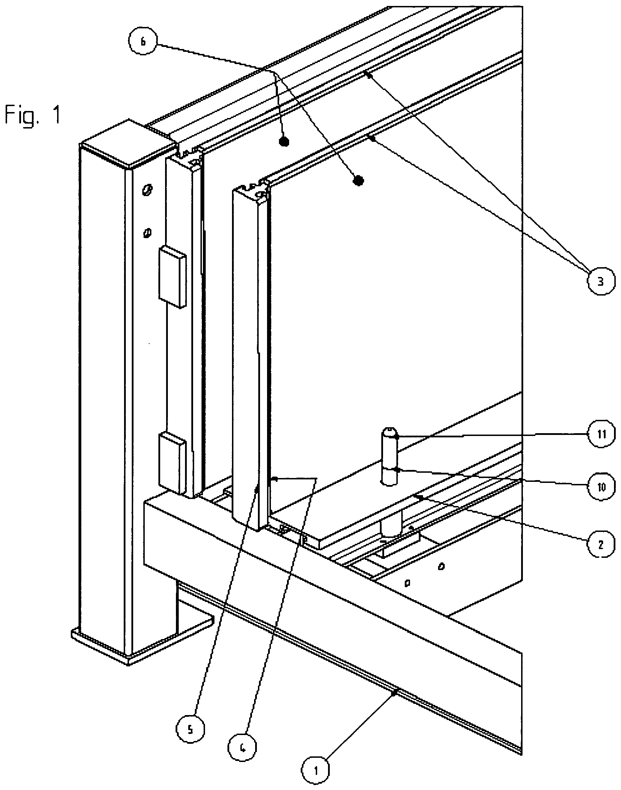

In figure 1 is illustrated a section of a vertical plate freezer where certain parts of the freezer have been removed in order to allow the invention to be illustrated.

A vertical plate freezer comprises a base frame 1 on which base frame a bottom 2 is arranged. In the illustration only part of the bottom 2 is illustrated. Arranged vertically on the bottom 2 are a plurality of freezing plates 3 which freezing plates have a vertical side edge 4 which in this particular embodiment terminates in an upstanding profile 5 which is adapted to receive side limitations (not illustrated). By placing side limitations between the two upstanding profiles 5 on two adjacent freezing plates 3 a void is created between two adjacent freezing plates which in practice are called a station 6.

In the particular embodiment illustrated the bottom comprises a number of independent sections corresponding to the number of stations (voids limited by the vertical freezing plates, the side limitations and the bottom section). When the freezing cycle is completed, each bottom section is elevated, relative to the freezing plates, whereby the frozen block becomes accessible, such that it may easily be removed. For the station in which the temperature sensor is embedded, the sensor is fastened to a bottom frame beneath the bottom, and projecting through an aperture in the bottom. As the bottom is elevated the sensor is withdrawn at the same time, due to the relative movement between the bottom and the frame.

The freezing plates 3 are connected (not illustrated) to a source of cryonic liquid which may be circulated in the freezing plates in order to freeze the products placed in the station 6.

Projecting vertically from the bottom 2 of the vertical plate freezer is a temperature sensor 10 which has the size and dimension and position in the bottom such that the temperature sensor 10 and especially the sensor element 11 which will be arranged in the distal end of the sensor 10 is positioned such that the sensor element 11 will be positioned where it takes the longest for the products placed in the station 6 to be frozen to a pre-determined temperature.

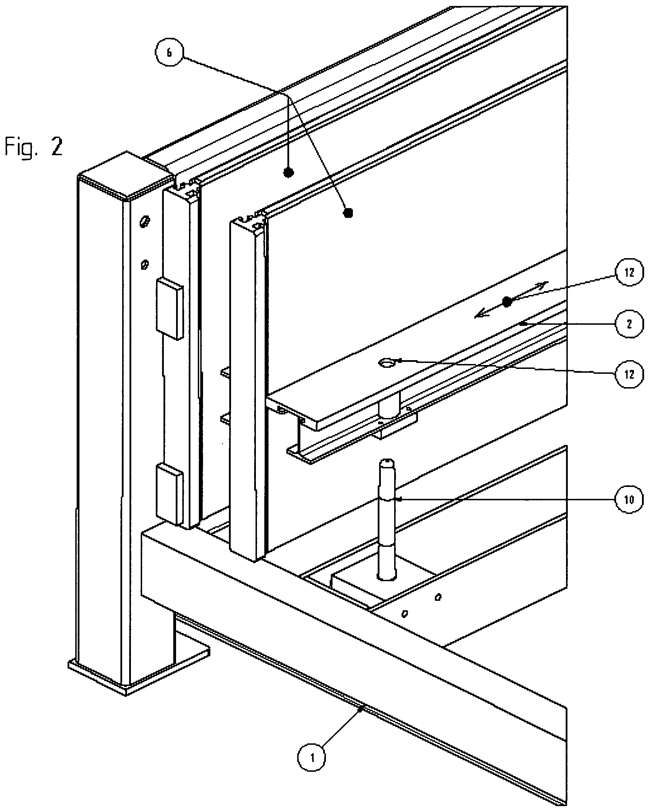

In figure 2 the temperature sensor 10 has been withdrawn from the station 6 such that the bottom 2 now is substantially smooth whereby the frozen block (not illustrated) may be removed for example by sliding the block in any of the directions indicated by the arrow 12. In the illustrated embodiment the sensor 10 has been removed by elevating the bottom 2 relative to the frame 1. Naturally the sensor element 10 may also be removed from the station 6 by lowering the sensor element 10 relative to the bottom 2 which also facilitates removal of the block in any of the directions illustrated by the arrow 12.

Removal of the sensor element 10 leaves a small aperture 12 in the bottom which for practical purposes has no influence on the overall functioning of the vertical plate freezer.

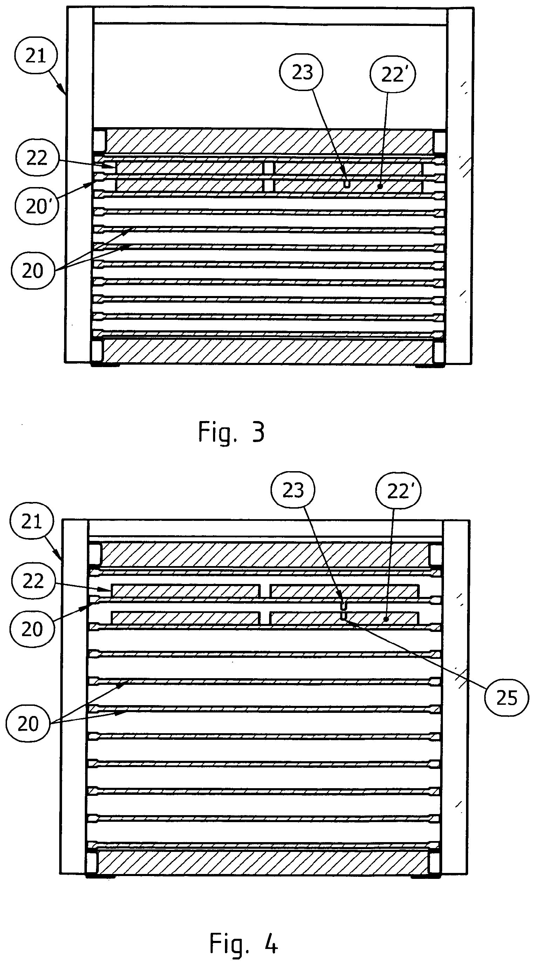

In figures 3 and 4 is schematically illustrated a horizontal plate freezer where a plurality of horizontal freezing plates 20 are arranged vertically superposed one on top of the other. Along the side edges of the freezing plates 20 are provided columns 21 with means for elevating or lowering the horizontal plates relative to each other. In figure 3 the horizontal plate freezer is illustrated in its freezing mode where the freezing plates are assembled around objects 22 to be frozen. As was the case with the vertical plate freezer as explained above, the freezing plates comprise means (not illustrated) for circulating a cryonic liquid inside the freezing plates 20 in order to accomplish the freezing process.

One of the freezing plates 20' is provided with a downward facing temperature sensor 23. As the plates 20 are moved vertically towards each other thereby coming into thermal contact with the blocks 22 the temperature sensor 23 will be inserted in a block 22' to be frozen.

After the freezing process has been concluded, the plates 20 will be vertically spaced such that the blocks 22 may be removed. During the vertical displacement of the plates 20 the temperature sensor will as illustrated in figure 4 be withdrawn from the block 22' and leave a small hole 25 in the block 22'. Apart from this the blocks 22, 22' are completely undamaged and are completely frozen due to the ensuring of complete and thorough freezing provided by the temperature sensor 23 which in its inserted position as illustrated in figure 3 ensures that the core temperature of the blocks 22, 22' has reached the pre-defined target temperature.

Although the invention has been described above with reference to specific examples, the invention shall not be limited beyond the scope of the appended claims.

## Claims

1. Method for measuring core temperature in a frozen object in a horizontal or vertical plate freezer, where a temperature sensor (10,23) is arranged projecting from an inside wall (2,3,20) of a freezer into a freezing space (6), said freezing space (6) is adapted to be filled with material to be frozen , and where the sensor (10,23) has means for registering the temperature accessible outside the freezer, where the material to be frozen is placed around the sensor (10,23) inside the freezer such that the sensor (10,23) is embedded in the material to be frozen, and where the freezing process is controlled at least in part by data collected from the temperature sensor (10,23).

2. Method according to claim 1, wherein temperature data for a complete freezing cycle is stored in the control unit, such that the actual temperature registered by the temperature sensor (10,23) is compared to the complete freezing cycle, according to which input and freezing cycle the control unit regulates the freezer, to achieve that the freezing process closely follows the predetermined freezing cycle, and when a pre-defined temperature is registered by the sensor (10,23), the control unit stops the freezing process.

3. Method according to any of claims 1 or 2 wherein the temperature sensor (10,23), when the freezing cyclus has finished, is withdrawn from the now frozen material through the inside wall (2,3,20) of the freezer, whereafter the frozen material may be removed.

4. Vertical or horizontal plate freezer, comprising wall members (2,3,20) delimiting a freezing space (6), where a temperature sensor (10,23) is projecting from an inside wall (2,3,20) of the freezer into the freezing space (6), where said freezing space (6) is adapted to be filled with material to be frozen, where said temperature sensor (10,23) is configured to be embedded in said material to be frozen.

5. Freezer according to claim 4, where said sensor (10,23) is arranged at a distance from the inside wall (2,3,20) of the freezer corresponding to approximately half the distance of the thinnest cross-distance of the material to be frozen

6. Freezer according to claim 4, where said temperature sensor (10,23) is removable or detachable.

7. Freezer according to any of claims 4 to 6 **characterized in that** the temperature sensor (10,23) is conically shaped and optionally provided with a friction reducing layer, such as for example Teflon®, fat, or Vaseline®.

8. Freezer according to claim 4 **characterized in that** the freezer is a vertical plate freezer, where a plurality of freezing plates (3) are arranged vertically on a bottom, and where side limitations are provided adjacent said bottom and the vertical sides of the freezing plates, whereby the bottom, two freezing plates and the side limitations delimits a station (6), and that the temperature sensor (10,23) is arranged in a side limitation or the bottom, projecting into at least one station (6) for each freezer.

9. Freezer according to claim 4 **characterized in that** the freezer is a horizontal plate freezer, where a plurality of freezing plates (20) are arranged horizontally and superposed, where means are provided for displacing the horizontal plates (20) vertically, and where in at least one horizontal plate, the temperature sensor (23) is arranged projecting upwards or downwards.

## Patentansprüche

1. Verfahren zum Messen einer Kerntemperatur eines gefrorenen Gegenstandes in einer horizontalen oder vertikalen Plattengefriereinrichtung, wobei ein Temperatursensor (10, 23) angeordnet ist, um sich von einer Innenwand (2, 3, 20) einer Gefriereinrichtung in einen Gefrierraum (6) zu erstrecken, wobei der Gefrierraum (6) geeignet ist, um mit einem zu gefrierenden Material gefüllt zu werden, und wobei der Sensor (10, 23) ein Element zum Registrieren der außerhalb der Gefriereinrichtung zugänglichen Temperatur, wobei das zu gefrierende Material um den Sensor (10, 23) innerhalb der Gefriereinrichtung angebracht wird, sodass der Sensor (10, 23) in das zu gefrierende Material eingebettet ist, und wobei der Gefrierprozess mindestens teilweise aufgrund von Daten gesteuert wird, die von dem Temperatursensor (10, 23) erfasst werden.

2. Verfahren nach Anspruch 1, wobei die Temperaturdaten für einen vollständigen Gefrierzyklus in der Sensoreinheit gespeichert werden, sodass die aktuelle von dem Temperatursensor (10, 23) registrierte Temperatur mit dem vollständigen Gefrierzyklus verglichen wird, wobei die Steuereinheit die Gefriereinrichtung gemäß der Eingabe und dem Gefrierzyklus regelt, um zu erreichen, dass der Gefrierprozess dem vorbestimmten Gefrierzyklus weitgehend folgt, und die Steuereinheit den Gefrierprozess stoppt, wenn eine vordefinierte Temperatur von dem Sensor (10, 23) registriert wird.

3. Verfahren nach einem der Ansprüche 1 oder 2, wobei der Temperatursensor (10, 23), wenn der Gefrierzyklus beendet wurde, durch die Innenwand (2, 3, 20) der Gefriereinrichtung aus dem gerade eingefrorenen Material zurückgezogen wird, und das gefrorene Material anschließend entfernt werden kann.

4. Vertikale oder horizontale Plattengefriereinrichtung, die Wandelemente (2, 3, 20) umfasst, die einen Gefrierraum (6) begrenzen, wobei sich ein Temperatursensor (10, 23) von einer Innenwand (2, 3, 20) der Gefriereinrichtung in den Gefrierraum (6) erstreckt, wobei der Gefrierraum (6) geeignet ist, um mit einem zu gefrierenden Material gefüllt zu werden, und wobei der Temperatursensor (10, 23) konfiguriert ist, um in dem zu gefrierenden Material eingebettet zu werden.

5. Gefriereinrichtung nach Anspruch 4, wobei der Sensor (10, 23) in einem Abstand von der Innenwand (2, 3, 20) der Gefriereinrichtung angeordnet wird, der ungefähr der Hälfte des Abstands des dünnsten Querschnitts des zu gefrierenden Materials entspricht.

6. Gefriereinrichtung nach Anspruch 4, wobei der Temperatursensor (10, 23) entfernbar oder abnehmbar ist.

7. Gefriereinrichtung nach einem der Ansprüche 4 bis 6, **dadurch gekennzeichnet, dass** der Temperatursensor (10, 23) konisch geformt ist und optional mit einer reibungsverringernden Schicht wie zum Beispiel Teflon®, Fett oder Vaseline® bereitgestellt wird.

8. Gefriereinrichtung nach Anspruch 4, **dadurch gekennzeichnet, dass** die Gefriereinrichtung eine vertikale Plattengefriereinrichtung ist, wobei eine Vielzahl von Gefrierplatten (3) vertikal auf einem Boden angeordnet sind, und wobei die seitlichen Begrenzungen in der Nähe des Bodens und den vertikalen Seiten der Gefrierplatten bereitgestellt werden, wobei der Boden, zwei Gefrierplatten und die seitlichen Begrenzungen eine Station (6) begrenzen, und dadurch, dass der Temperatursensor (10, 23) in einer seitlichen Begrenzung oder dem Boden angeordnet ist und sich für jede Gefriereinrichtung in mindestens eine Station (6) erstreckt.

9. Gefriereinrichtung nach Anspruch 4, **dadurch gekennzeichnet, dass** die Gefriereinrichtung eine horizontale Plattengefriereinrichtung ist, wobei eine Vielzahl von Gefrierplatten (20) horizontal und übereinander angeordnet sind, wobei ein Element bereitgestellt wird, um die horizontalen Platten (20) vertikal zu verschieben, und wobei der Temperatursensor (23) in mindestens einer horizontalen Platte so angeordnet ist, dass er sich aufwärts oder abwärts erstreckt.

## Revendications

1. Procédé de mesure de la température à coeur dans un objet congelé dans un congélateur à plaques horizontales ou verticales, un capteur de température (10, 23) étant agencé en saillie d'une paroi intérieure (2, 3, 20) d'un congélateur dans un espace de congélation (6), ledit espace de congélation (6) étant adapté pour être rempli de matériau à congeler, et le capteur (10, 23) ayant des moyens pour enregistrer la température accessible à l'extérieur du congélateur, le matériau à congeler étant placé autour du capteur (10, 23) à l'intérieur du congélateur de telle sorte que le capteur (10, 23) est intégré dans le matériau à congeler, et le processus de congélation étant commandé au moins en partie par des données recueillies par le capteur de température (10, 23) .

2. Procédé selon la revendication 1, des données de température pour un cycle de congélation complet étant mémorisées dans l'unité de commande, de sorte que la température réelle enregistrée par le capteur de température (10, 23) est comparée au cycle de congélation complet, en fonction desquels entrée et cycle de congélation l'unité de commande règle le congélateur, pour obtenir que le processus de congélation suive de près le cycle de congélation prédéterminé, et lorsqu'une température prédéterminée est enregistrée par le capteur (10, 23), l'unité de commande arrête le processus de congélation.

3. Procédé selon l'une quelconque des revendications 1 et 2, le capteur de température (10, 23), lorsque le cycle de congélation est terminé, étant retiré du matériau maintenant congelé à travers la paroi intérieure (2, 3, 20) du congélateur, après quoi le matériau congelé peut être retiré.

4. Congélateur à plaques verticales ou horizontales, comprenant des éléments de paroi (2, 3, 20) délimitant un espace de congélation (6), un capteur de température (10, 23) faisant saillie depuis une paroi intérieure (2, 3, 20) du congélateur dans l'espace de congélation (6), ledit espace de congélation (6) étant adapté pour être rempli avec un matériau à congeler, ledit capteur de température (10, 23) étant configuré pour être intégré dans ledit matériau devant être congelé.

5. Congélateur selon la revendication 4, ledit capteur (10, 23) étant agencé à une distance de la paroi intérieure (2, 3, 20) du congélateur correspondant approximativement à la moitié de la distance transversale la plus mince du matériau à congeler.

6. Congélateur selon la revendication 4, ledit capteur de température (10, 23) étant amovible ou détachable.

7. Congélateur selon l'une quelconque des revendications 4 à 6, **caractérisé en ce que** le capteur de température (10, 23) est de forme conique et éventuellement pourvu d'une couche de réduction de friction, telle que par exemple du Téflon®, de la graisse ou de la Vaseline®.

8. Congélateur selon la revendication 4, **caractérisé en ce que** le congélateur est un congélateur à plaques verticales, une pluralité de plaques de congélation (3) étant agencées verticalement sur un fond, et des limitations latérales étant prévues adjacentes audit fond et aux côtés verticaux des plaques de congélation, le fond, deux plaques de congélation et les limitations latérales délimitant une disposition (6), et **en ce que** le capteur de température (10, 23) est agencé dans une limitation latérale ou dans le fond, faisant saillie dans au moins une disposition (6) pour chaque congélateur.

9. Congélateur selon la revendication 4, **caractérisé en ce que** le congélateur est un congélateur à plaques horizontales, une pluralité de plaques de congélation (20) étant agencées horizontalement et superposées, des moyens étant prévus pour déplacer verticalement les plaques horizontales (20), et dans au moins une plaque horizontale, le capteur de température (23) étant agencé en saillie vers le haut ou vers le bas.
